# EUROPÄISCHE PATENTSCHRIFT

(11) **EP 2 338 197 B1**
(45) Veröffentlichungstag und Bekanntmachung des Hinweises auf die Patenterteilung: **31.10.2012**
(21) Anmeldenummer: 09778559.6
(22) Anmeldetag: 16.09.2009
(51) Int. Cl.: H01M 8/04, H01M 8/24, H01M 8/14

(54) **BRENNSTOFFZELLENANORDNUNG MIT MODULAREM AUFBAU**
FUEL CELL ASSEMBLY WITH A MODULAR CONSTRUCTION
DISPOSITIF DE CELLULES ÉLECTROCHIMIQUES DE CONCEPTION MODULAIRE

(30) Priorität: 19.09.2008 DE 102008047921; 17.03.2009 DE 102009013586
(43) Veröffentlichungstag der Anmeldung: 29.06.2011
(73) Patentinhaber: MTU Onsite Energy GmbH, 85521 Ottobrunn (DE)
(72) Erfinder: BURMEISTER, Uwe, 81739 München (DE); HUBER, Johann, 85464 Finsing (DE); OTTMANN, Norbert, 93051 Regensburg (DE); PETERHANS, Stefan, 83674 Gaissach (DE); WAGNER, Wolfgang, 85579 Neubiberg (DE); WEISER, Christoph, 82538 Geretsried (DE)
(74) Vertreter: Winter, Josef
(86) Internationale Anmeldenummer: PCT/EP2009/006699
(87) Internationale Veröffentlichungsnummer: WO 2010/031546

(56) Entgegenhaltungen:
- EP-A- 1 909 349
- DE-A1- 19 947 565
- US-A- 5 741 605
- US-A1- 2003 054 209

## Beschreibung

Die vorliegende Erfindung betrifft eine Hochtemperatur-Brennstoffzellenanordnung, insbesondere eine Schmelzkarbonat-Brennstoffzellenanordnung sowie ein Verfahren zum Betreiben einer derartigen Brennstoffzellenanordnung.

Zur Erzeugung von elektrischer Energie mittels Brennstoffzellen werden üblicherweise eine größere Anzahl von Brennstoffzellen in Form eines Stapels angeordnet, wobei die Brennstoffzellen jeweils eine Anode, eine Kathode und einen dazwischen angeordneten Elektrolyten aufweisen. Die einzelnen Brennstoffzellen sind jeweils durch Bipolarplatten voneinander getrennt und elektrisch kontaktiert. An den Anoden und den Kathoden sind jeweils Stromkollektoren vorgesehen, die dazu dienen, die Anoden bzw. Kathoden einerseits elektrisch zu kontaktieren und anderseits Reaktionsgase an diesen vorbeizuführen. Im Randbereich von Anode, Kathode und Elektrolytmatrix sind jeweils Dichtungselemente vorgesehen, welche eine seitliche Abdichtung der Brennstoffzellen und damit des Brennstoffzellenstapels gegen ein Austreten von Anoden - und Kathodengas bilden.

Bei einer Schmelzkarbonatbrennstoffzelle besteht das Elektrolytmaterial typischerweise aus binären oder ternären Alkalikarbonatschmelzen (beispielsweise Mischschmelzen aus Lithium- und Kaliumkarbonat), die in einer porösen Matrix fixiert sind. Im Betrieb erreichen Schmelzkarbonatbrennstoffzellen typischerweise Arbeitstemperaturen von etwa 650 °C. Dabei findet auf der Anodenseite eine Reaktion von Wasserstoff mit Karbonationen zu Wasser und Kohlendioxid unter Elektronenfreisetzung statt. Kathodenseitig reagiert Sauerstoff mit Kohlendioxid unter Elektronenaufnahme zu Karbonationen. Dabei wird Wärme frei. Die als Elektrolyt verwendete Alkalikarbonatschmelze liefert einerseits die für die Anodenhalbreaktion benötigten Karbonationen und nimmt andererseits die bei der Kathodenhalbreaktion entstehenden Karbonationen auf. In der Praxis wird der Anodenseite der Brennstoffzelle meist ein kohlenwasserstoffhaltiger Energieträger, wie beispielsweise Methan, das beispielsweise aus Erdgas oder Biogas stammen kann, sowie Wasser zugeführt, aus dem durch interne Reformierung der für die Anodenhalbreaktion benötigte Wasserstoff gewonnen wird. Das Anodenabgas wird mit zusätzlich zugeführter Luft gemischt und anschließend zur Beseitigung etwaiger Restbestandteile des Brenngases katalytisch oxidiert. Das entstandene Gasgemisch enthält nun Kohlendioxid und Sauerstoff, also genau die für die Kathodenhalbreaktion benötigten Gase, so dass Anodenabgas nach Frischluftzufuhr und katalytischer Oxidation unmittelbar in die Kathodenhalbzelle eingeleitet werden kann.

Die am Kathodenausgang austretende heiße Abluft ist schadstofffrei und kann thermisch weiterverwertet werden. Der elektrische Wirkungsgrad der SchmelzkarbonatBrennstoffzelle liegt bereits bei 45 bis 50 % und unter Nutzung der bei dem Gesamtprozess freigesetzten Wärme lässt sich ein Gesamtwirkungsgrad von ca. 90 % erzielen.

Der Anmelderin ist es gelungen, den Brennstoffzellenstapel und alle auf hoher Temperatur arbeitenden Systemkomponenten in ein gemeinsames gasdichtes Schutzgehäuse zu integrieren. Damit wird einerseits der Wirkungsgrad der Anlage verbessert und andererseits konnte eine Anordnung realisiert werden, bei der der Kathodengasstrom im Innenraum des Schutzgehäuses frei zirkulieren und der Anodenabgasstrom frei in den zirkulierenden Kathodengasstrom eingeleitet werden kann. Während bei herkömmlichen Brennstoffzellenstapeln am Anodeneingang, am Anodenausgang, am Kathodeneingang und am Kathodenausgang jeweils Gasverteiler bzw. Gassammler vorgesehen sind, die aufwändig gegenüber dem Brennstoffzellenstapel abgedichtet werden müssen, ist bei der bekannten Anlage der Anmelderin aufgrund des frei im Schutzgehäuse zirkulierenden Kathodengasstroms zwar ein gegenüber dem Brennstoffzellenstapel abzudichtender Gasverteiler am Anodeneingang vorgesehen, aber am Kathodeneingang ist kein Gasverteiler erforderlich, so dass die Gesamtkonstruktion wesentlich vereinfacht werden kann.

Die bekannte Brennstoffzellenanordnung der Anmelderin wird beispielsweise in den internationalen Patentanmeldungen WO 96/02951 A1 und WO 96/20506 A1 und in der deutschen Patentanmeldung DE 195 48 297 A1 ausführlicher beschrieben.

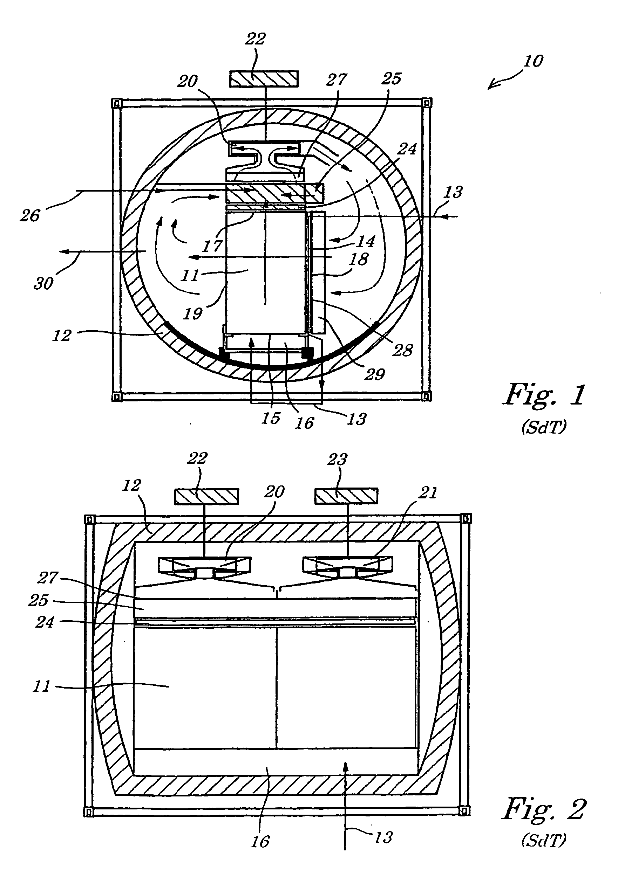

Die wesentlichen Komponenten der bekannten Brennstoffzellenanordnung sind in den Figuren 1 und 2 in einer frontalen bzw. einer seitlichen Querschnittsansicht schematisch dargestellt. Die insgesamt mit der Bezugsziffer 10 bezeichnete Brennstoffzellenanordnung weist einen horizontal liegenden, d. h. aus vertikal angeordneten, plattenförmigen Elementen bestehenden Brennstoffzellenstapel 11 auf, der in einem thermisch isolierten, gasdichten Schutzgehäuse 12 angeordnet ist. Brenngas wird über eine Brenngasleitung 13 in das Innere des gasdichten Schutzgehäuses 12 geführt und über einen Wärmetauscher 14 in einen am Anodeneingang 15 auf der Unterseite des Brennstoffzellenstapels 11 angeordneten Brenngasverteiler 16 in die Anodenkammern des Brennstoffzellenstapels 11 eingeleitet. Das Brenngas durchströmt die Anodenkammern in im wesentlichen vertikaler Richtung und tritt auf der an der Oberseite des Brennstoffzellenstapels befindlichen Anodenausgangsseite 17 wieder aus. Der Wärmetauscher 14 ist ein Gas/Gas-Wärmetauscher, der einerseits von dem Brenngas und andererseits von einer Strömung des innerhalb des gasdichten Schutzgehäuses 12 zirkulierenden Kathodengases durchströmt wird. Das Kathodengas tritt am seitlich angeordneten Kathodeneingang 18 in den Brennstoffzellenstapel 11 ein und verlässt diesen am Kathodenausgang 19 auf der gegenüberliegenden Seite des Brennstoffzellenstapels. Wie man der Figur 1 entnehmen kann, sind die Strömungsrichtungen von Kathodengas und Brenngas senkrecht zueinander. Die Aufrechterhaltung der Gasströme in dem Schutzgehäuse 12 wird mittels zweier oberhalb des Brennstoffzellenstapels 11 angeordneter Gebläse 20, 21 aufrechterhalten, die jeweils von Elektromotoren 22, 23 angetrieben werden. Unmittelbar über dem Anodenausgang 17 des Brennstoffzellenstapels 11 sind ein Diffusor 24 und daran anschließend ein statischer Mischer 25 angeordnet. In dem statischen Mischer 25 wird das den Anodenausgang 17 verlassende Anodenabgas mit dem im Gehäuse 12 zirkulierenden Kathodengasstrom gemischt. Über eine Leitung 26 wird außerdem Frischluft in den statischen Mischer 24 geleitet. Unter der Wirkung der Gebläse 20, 21 wird das Gasgemisch aus Anodenabgas, umgewälztem Kathodengas und Frischluft in einen oberhalb des statischen Mischers 25 angeordneten katalytischen Brenner 27 geleitet, in welchem brennbare Restbestandteile des Anodenabgases katalytisch verbrannt und in Nutzwärme umgesetzt werden. Das den katalytischen Brenner verlassende Gasgemisch, welches nunmehr mit Sauerstoff und Kohlendioxid die Hauptbestandteile der Kathodenreaktion enthält, wird über die Gebläse 20, 21 zum Kathodeneingang 18 gelenkt, wo es den Brennstoffzellenstapel 11 horizontal durchquert. Wie oben erwähnt wird nach Austritt am Kathodenausgang 19 ein Teilstrom des Kathodengases zurück zum statischen Mischer 24 geleitet. Vor dem Kathodeneingang 18 ist vorzugsweise noch ein Startheizer 28 angeordnet, welcher die Prozessgase beim Anfahren der Brennstoffzellenanordnung 10 auf die Betriebstemperatur von etwa 600°C bringt. Vor dem Kathodeneingang 18 kann außerdem ein Diffusor 29 angeordnet sein, der zusammen mit weiteren zwischen den Gebläsen 20, 21 und dem Kathodeneingang 18 vorgesehenen Einbauten ein homogenes Anströmen des Zellstapels ermöglichen soll. Wenn aber, wie im dargestellten Beispiel, der Wärmetaucher 14 ebenfalls vor dem Kathodeneingang 18 angeordnet ist, kann ein homogenes Anströmen des Zellstapels auch durch eine geeignete Ausgestaltung des Wärmetauschers gewährleistet werden, so dass gegebenenfalls auf den zusätzliche Diffusor 29 verzichtet werden kann. Überschüssige Kathodenabluft verlässt den Brennstoffzellenstapel 11 über eine hier nur schematisch angedeutete Kathodenabluftleitung 30.

Die hier beschriebene Brennstoffzellenanordnung wird von der Anmelderin unter der Bezeichnung HM 300 in einem kreiszylindrischen Schutzgehäuse vertrieben.

Bei diesem bekannten Konstruktionsprinzip sind der statische Mischer, der katalytische Brenner und das daran anschließende Gebläse unmittelbar über dem Anodenausgang des Brennstoffzellenstapels angeordnet, was hohe strömungstechnische Anforderungen an das Umwälzgebläse stellt, nämlich sowohl im Hinblick auf das Ansaugverhalten des Gebläses, um eine gleichmäßige Durchmischung von Frischluft, Anodenabgas und Kathodenabluft im statischen Mischer zu gewährleisten, als auch im Hinblick auf das Ausströmverhalten des Gebläses, um ein gleichmäßiges Anströmen des Zellstapels durch das Gasgemisch zu gewährleisten. Diese Anforderungen können bei der bisherigen Konstruktion nur durch Gleichrichter und Einbauten im Strömungsweg gewährleistet werden, die jedoch zu Druckverlusten führen, was wiederum eine höhere Gebläseleistung erfordert. Bei Zellstapeln mit mehreren hundert Einzelzellen sind zudem mehrere entlang des Zellstapels angeordnete Gebläse erforderlich, um ein homogenes Strömungsverhalten zu erzielen.

Ein weiterer Nachteil der bisherigen Konstruktion besteht darin, dass der katalytische Brenner über dem Zellstapel zwischen statischem Mischer und Gebläse angeordnet ist. Der Katalysator ist während der Betriebslaufzeit jedoch Verschmutzungen ausgesetzt, die zu einem verschlechterten Strömungsdurchgang und weiteren Druckverlusten führen, so dass der Katalysator regelmäßig gereinigt werden muss. Bei der bisherigen Anordnung muss dazu jedoch der komplette Zellstapel demontiert werden, was mit einem sehr hohen Arbeitsaufwand verbunden ist und nur vom Hersteller durchgeführt werden kann.

Ein weiterer Nachteil der bekannten Konstruktion besteht darin, dass der Mischer unmittelbar oberhalb des Anodenausgangs aufgrund des geringen zur Verfügung stehenden Platzes sehr kompakt ausgebildet sein muss, so dass eine zufrieden stellende Mischung nur durch zahlreiche Einbauten mit entsprechend hohem Druckverlust erzielt werden kann. Die Herstellungskosten des bisher verwendeten Mischers sind daher hoch.

Schließlich lässt die bisherige Brennstoffzellenanordnung nur wenige konstruktive Freiheitsgrade zu. So ist durch die Verwendung eines kreiszylindrischen Schutzgehäuses das Verhältnis von Höhe und Breite des Brennstoffzellenstapels und der weiteren im Schutzgehäuse angeordneten Komponenten im Wesentlichen vorgegeben und die Freiheitsgrade hinsichtlich der Anordnung und Dimensionierung der in dem Schutzgehäuse angeordneten Komponenten sind gering. Die spezifisch aufeinander angepasste Auslegung der einzelnen Komponenten führt auch dazu, dass je nach Leistungsauslegung der Anlage zahlreiche Komponenten neu konstruiert werden müssen. Zudem ist der Montageaufwand der bisher verwendeten Brennstoffzellenanordnung hoch.

Der vorliegenden Erfindung liegt daher das technische Problem zugrunde, das beschriebene Konstruktionsprinzip eines in einem Schutzgehäuse integrierten Brennstoffzellenstapels mit in dem Schutzgehäuse zirkulierenden Kathodengasstrom weiter zu verbessern.

Die vorliegende Erfindung löst diese technischen Probleme durch Bereitstellung einer Brennstoffzellenanordnung mit den Merkmalen des beigefügten Patentanspruchs 1. Vorteilhafte Weiterbildungen der Erfindung sind Gegenstände der abhängigen Patentansprüche.

Erfindungsgemäß wird vorgeschlagen, das Gemisch aus Frischluft, Anodenabgas und Kathodenabluft nach Durchqueren des katalytischen Brenners nicht unmittelbar vom Gebläse anzusaugen, sondern zunächst in einem Ansaugrohr zu sammeln, das in das Gebläse mündet. Die Mischung und katalytische Verbrennung des angesaugten Gases erfolgt bereits vor dem Ansaugrohr, so dass eine optimale Ansaugung durch das Gebläse gewährleistet ist. Aufgrund der Strömungsführung in einem Ansaugrohr kann das Gebläse neben dem Schutzgehäuse angeordnet werden und durch standardisierte Ansaug- bzw. Auslassstutzen mit dem Innenraum des Gehäuses kommunizieren. Da das Schutzgehäuse und das angeflanschte Gebläse zwei separate Baugruppen bilden, können beide Baugruppen unabhängig voneinander konstruiert und optimiert werden. In den über dem Zellstapel gewonnenen Raum kann ein optimierter Verteiler zur Längsverteilung des aus dem Gebläse kommenden Gasgemisches angeordnet werden, so dass die Ansaug- und Ausströmeigenschaften des Gebläses selbst unkritisch sind. Mittels eines sich keilförmig in Längsrichtung des Brennstoffzellenstapels verjüngenden Strömungsverteilers wird ohne aufwändige Gleichrichter und Einbauten eine gleichmäßige Anströmung des Zellstapels gewährleistet, so dass Druckverluste gegenüber der herkömmlichen Konstruktion deutlich verringert werden können. Dementsprechend reduzieren sich auch die Leistungsanforderungen an das Gebläse. Überraschend wurde festgestellt, dass mit der erfindungsgemäß vorgeschlagenen Anordnung Zellstapel mit bis zu 600 Einzelzellen mit einem einzigen Gebläse versorgt werden können.

Erfindungsgemäß wird auch vorgeschlagen, den katalytischen Brenner auf der Kathodenausgangsseite zwischen dem Brennstoffzellenstapel und der Wand des Schutzgehäuses anzuordnen. Aufgrund dieser Anordnung ist der Katalysator leichter zugänglich, so dass die Wartung zu Reinigungsarbeiten vereinfacht wird. In der Wand des Schutzgehäuses können beispielsweise Reinigungs-/Befüllungsöffnungen vorgesehen sein, so dass keine Demontage des Zellstapels mehr erforderlich ist. Die Reinigung des Katalysators kann daher vom Anwender selbst durchgeführt werden. Im Gegensatz zur bisher verwendeten Brennstoffzellenanordnung wird der katalytische Brenner von oben nach unten durchströmt, so dass nun auch der Einsatz von Schüttgutkatalysatoren ermöglicht wird. Beim Stand der Technik konnten keine Schüttgutkatalysatoren verwendet werden, da beim Durchströmen von unten nach oben ein Aufschweben der Katalysatorpartikel im Luftstrom auftritt, was eine starke mechanische Abnutzung der Katalysatorkörper mit sich bringt. Gleichwohl können aber auch in der geänderten Anordnung die bisher vorzugsweise verwendeten Wabenkatalysatoren eingesetzt werden.

Erfindungsgemäß wird auch ein einfacher und druckverlustarmer Gasmischer bereitgestellt. Der Gasmischer weist eine erste Mischzone auf, in welcher Kathodenabluft mit Frischluft vermischt wird, sowie eine zweite Mischzone, in welchem Anodenabgas in das Gemisch aus Kathodenabluft und Frischluft eingeleitet wird. Der Mischer ist vorzugsweise auf der Kathodenausgangsseite zwischen dem Zellstapel und der Wand des Schutzgehäuses oberhalb des ebenfalls dort vorgesehenen katalytischen Brenners angeordnet. Damit lassen sich lange Mischzonen verwirklichen, so dass weniger Einbauten und Mischelemente erforderlich sind, um eine homogene Durchmischung der Kathoden- und Anodenabgasströme und der Frischluft zu gewährleisten. Damit wird der Druckverlust in dem Mischer gegenüber dem bekannten auf dem Brennstoffzellenstapel angeordneten Mischer deutlich reduziert. Zudem kann der erfindungsgemäße Mischer durch einfache Blechteile leicht und kostengünstig gefertigt werden, was die Gesamtkosten der Brennstoffzellenanordnung reduziert.

Die erfindungsgemäße Brennstoffzellenanordnung ist in Funktionsgruppen angeordnet, die weitgehend unabhängig voneinander dimensioniert und optimiert werden können.

Eine Funktionsgruppe besteht dabei aus dem Brennstoffzellenstapel mit Anodeneingangsgasverteiler und dem Anodenausgangsgassammler. Im Gegensatz zur herkömmlichen Konstruktion, bei welcher der Brennstoffzellenstapel noch Komponenten wie den Wärmetauscher, den statischen Mischer und den katalytischen Brenner umfasst hat, ist die nun vorgeschlagene Baugruppe wesentlich einfacher aufgebaut. Eine weitere Funktionsgruppe besteht aus der Kathodengaszuführung mit Verteilerkanal, Startheizer und Wärmetauscher. Diese Funktionsgruppe kann außerhalb des Containers komplett vormontiert und vor dem Stapeleinzug integriert werden.

Eine weitere Funktionsgruppe besteht aus der Mischer- und Katalysatoreinheit mit Blecheinbauten zur Vermischung der Frischluft, der Kathodenabluft und des Anodenausgangsgases, dem Katalysatorgehäuse und dem Katalysatorausgangsstromsammler mit Umlenkblechen.

Eine weitere Funktionsgruppe besteht aus dem Umwälzgebläse mit Laufradgehäuse und saugseitigen Anschlüssen über ein Ansaugrohr zum Katalysatorausgangsgehäuse und druckseitig zum Kathodengasverteilerkanal.

Erfindungsgemäß wird vorgeschlagen, das Schutzgehäuse rechteckig auszubilden, so dass die Konstruktion der Komponenten der erfindungsgemäßen Brennstoffzellenanordnung unabhängig vom Verhältnis Breite zu Höhe ist.

Die Funktionsgruppen können größtenteils außerhalb des Moduls vormontiert werden, was den Einbau erleichtert und beschleunigt.

Die Erfindung wird im Folgenden unter Bezugnahme auf ein in den beigefügten Zeichnungen dargestelltes Ausführungsbeispiel näher erläutert.

In den Zeichnungen zeigt
- Fig. 1: einen frontale Querschnittsansicht einer Brennstoffzellenanordnung des Standes der Technik;
- Fig. 2: einen seitliche Querschnittsansicht einer Brennstoffzellenanordnung des Standes der Technik;
- Fig. 3: einen frontale Querschnittsansicht einer Brennstoffzellenanordnung gemäß einer Ausführungsform der Erfindung;
- Fig. 4: einen vergrößerte Detailansicht des mit dem Kreis IV gekennzeichneten Bereichs der Figur 3;
- Fig. 5: einen seitliche Querschnittsansicht der in Figur 2 dargestellten erfindungsgemäßen Brennstoffzellenanordnung entlang der Linie V-V in Figur 3;
- Fig. 6: einen Draufsicht-Querschnitt der in Figur 2 dargestellten erfindungsgemäßen Brennstoffzellenanordnung entlang der Linie VI-VI der Figur 3; und
- Fig. 7: eine schematische perspektivische Ansicht des gasdichten Gehäuses einer Variante der Brennstoffzellenanordnung der Figuren 3 - 6.

Die Brennstoffzelle gemäß Stand der Technik wurde im Zusammenhang mit den Fig. 1 und 2 bereits oben beschrieben.

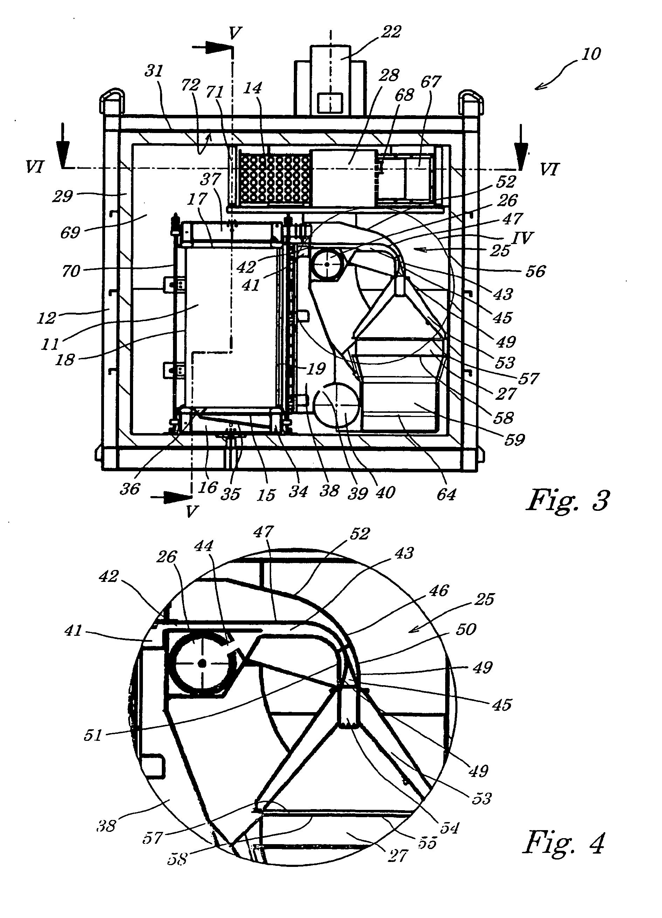

Im Folgenden werden unter Bezugnahme auf die Fig. 3 bis 7 zwei bevorzugte Ausführungsformen der erfindungsgemäßen Brennstoffzellenanordnung beschrieben. Dabei werden Bauelemente, welche identisch sind mit Bauelementen der Brennstoffzellenanordnung des Standes der Technik oder welche die gleiche oder eine ähnliche Funktion erfüllen, mit denselben Bezugsziffern bezeichnet.

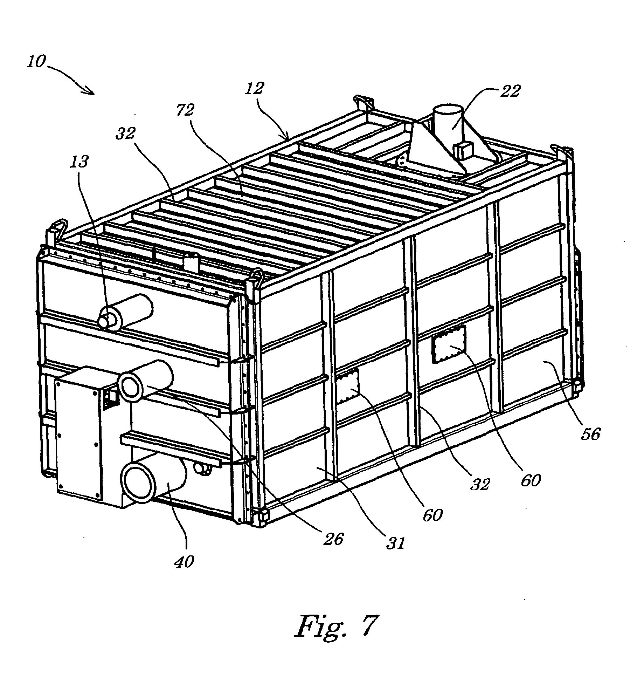

Die insgesamt wiederum mit der Bezugsziffer 10 bezeichnete Brennstoffzellenanordnung weist, wie die Brennstoffzellenanordnung des Standes der Technik, einen horizontal liegenden, aus vertikal angeordneten, plattenförmigen Elementen bestehenden Brennstoffzellenstapel 11 auf, der in einem thermisch isolierten, gasdichten Schutzgehäuse 12 angeordnet ist. Im Gegensatz zum Schutzgehäuse der Brennstoffzellenanordnung des Standes der Technik ist das Schutzgehäuse der erfindungsgemäßen Brennstoffzellenanordnung 10 im Wesentlichen rechteckig ausgebildet. Das gasdichte Schutzgehäuse 12 besteht aus einzelnen, miteinander verbundenen, beispielsweise miteinander verschweißten Metallplatten 31, die, wie insbesondere in Fig. 7 erkennbar ist, an ihrer Außenseite durch Stahlträger 32 stabilisiert werden, welche der gesamten Brennstoffzellenanordnung 10 die nötige Steifigkeit verleihen. Auf der Innenseite der Metallplatten 31 ist ein geeignetes Dämmmaterial 29 zur thermischen Isolierung des Innenraums des Schutzgehäuses 12 angebracht. Das Schutzgehäuse 12 kann leicht an geänderte Dimensionen des Brennstoffzellenstapels angepasst werden, was so dass eine kostengünstige Herstellung von Brennstoffzellenanordnungen mit unterschiedlicher Leistung ermöglicht.

Der Brennstoffzellenstapel 11 weist wieder eine Kathodeneingangsseite 18, eine Kathodenausgangsseite 19, eine Anodeneingangsseite 15 und eine Anodenausgangsseite 17 auf.

Brenngas gelangt über Brenngaszufuhrmittel, die eine Brenngasleitung 13 umfassen, in das Innere des gasdichten Schutzgehäuses 12 und wird zunächst durch einen Wärmetauscher 14 geleitet, der, im Gegensatz zum Stand der Technik, oberhalb des Brennstoffzellenstapels 11 angeordnet ist. Der Wärmetauscher 14 ist auch bei der erfindungsgemäßen Brennstoffzellenanordnung 10 als Gas/Gas-Wärmetauscher ausgebildet, der einerseits von dem Brenngas und andererseits von einer Strömung des innerhalb des gasdichten Schutzgehäuses 12 zirkulierenden Kathodengases durchströmt wird, so dass das Brenngas vor Einleitung in den Brennstoffzellenstapel 11 vorgewärmt wird. Nach Durchströmung des Wärmetauschers 14 gelangt das erwärmte Brenngas über eine an der Stirnseite des Brennstoffzellenstapels angeordnete Leitung 33 in einen an der Unterseite des Brennstoffzellenstapels 11 angeordneten Brenngasverteiler 16, der das Brenngas auf die Anodenkammereingänge der einzelnen Brennstoffzellen des Stapels verteilt. Im dargestellten Beispiel gelangt das Brenngas jedoch nicht direkt in die Anodenkammern. Vielmehr sind zwischen den Zellenelementen des Brennstoffzellenstapels 11 plattenförmig ausgebildete Reformierelemente angeordnet, welche zumindest einen Teil des Brenngases vor Einleitung in die Anodenkammern der Brennstoffzellen in an sich bekannter Weise reformieren. In den speziellen, in den Fig. 3 bis 6 dargestellten Ausführungsformen der Erfindung wird das erhitzte Anodengas über die Leitung 33 zunächst in eine als Hohlleitung 34 ausgebildete Randleiste des Anodengasverteilers 16 geleitet, die als Längsverteiler dient. Entlang der Hohlleitung 34 zweigen zahlreiche Verteilerleitungen 35 seitlich ab, die das Brenngas über an den Enden der Verteilerleitungen angeordnete V-förmige Verteilerköpfe 36 in die Eingänge der separaten, plattenförmigen Reformiereinheiten des Brennstoffzellstapels leiten. Nach Durchströmen der Reformiereinheiten, die beispielsweise alternierend mit Brennstoffzellenelementen in dem Brennstoffzellenstapel 11 angeordnet sein können, oder die jeweils nach einer bestimmten Zahl von Brennstoffzellenelementen vorgesehen sind; beispielsweise immer nach fünf Brennstoffzellenelementen, wird das zumindest teilweise reformierte Brenngas in den Innenraum des Brenngasverteilers 16 zurückgeleitet und gelangt von dort in die Anodeneingänge der Brennstoffzellenelemente des Stapels. Bei einer bevorzugten Ausführungsform der erfindungsgemäßen Brennstoffzellenanordnung wird zusätzlich zu diesen separaten Reformierelementen für die sogenannte indirekte internen Reformierung auch in den Anodenkammern der Brennstoffzellenelemente Reformierkatalysator für die sog. direkte interne Reformierung angeordnet. Die Abdichtung zwischen den Verteilerleitungen 35 und dem Innenraum des Brenngasverteilers 16 ist daher unkritisch, weil unreformiertes Brenngas, welches durch eventuelle Undichtigkeiten direkt in den Innenraum des Brenngasverteilers 16 gelangt, auch unmittelbar in den Brennstoffzellenelementen reformiert werden kann. Nach Durchströmen des Brennstoffzellenstapels 11 von unten nach oben tritt das Anodenabgas am Anodenausgang 17 auf der Oberseite des Brennstoffzellenstapels 11 aus und wird von einem Anodenabgassammler 37 aufgefangen und seitlich zu einem Gasmischer 25 geleitet, der in der Figur 3 und insbesondere in der vergrößerten Darstellung der Fig. 4 erkennbar ist und weiter unten detaillierter beschrieben wird.

Das in dem gasdichten Schutzgehäuse 12 zirkulierende Kathodengas tritt auf der offenen Kathodeneingangsseite 18 des Brennstoffzellenstapels11 in die Kathodenkammern der Brennstoffzellenelemente ein und verlässt nach im Wesentlichen horizontalem Durchströmen des Brennstoffzellenstapels den Stapel auf der Kathodenausgangsseite 19, auf welcher ein Kathodenabluftsammler 38 angeordnet ist. Über Öffnungen 39 ist der Kathodenabluftsammler 38 mit einer Kathodenabluftleitung 40 verbunden, über welche überschüssige Kathodenabluft aus der Brennstoffzellenanordnung 10 abgeführt wird.

Ein Teil der Kathodenabluft zirkuliert jedoch weiterhin in dem Schutzgehäuse 12 und tritt nach Mischen mit dem Anodenabgas und mit Frischluft in dem Gasmischer 25 und anschließendem Nachverbrennen in einem weiter unten beschrieben katalytischen Brenner 27 als sogenannten Kathodengas wieder auf der Kathodeneingangsseite 18 in den Brennstoffzellenstapel 11 ein.

Der an der Kathodenausgangsseite angeordnete Kathodenabluftsammler 38 weist in seinem oberen Bereich 41 eine sich im Wesentlichen über die gesamte Länge des Brennstoffzellenstapels 11 erstreckende Spaltöffnung 42 auf, durch die der in dem Schutzgehäuse 12 zirkulierende Anteil der Kathodenabluft in den nachgeschalteten Gasmischer 25 gelangt. Der Gasmischer 25 weist eine erste Mischzone 43 auf, in welche die den Kathodenabluftsammler über die Spaltöffnung 42 verlassende Kathodenabluft und Frischluft eingeleitet werden. Die Frischluft wird über eine im Wesentlichen parallel zum Brennstoffzellenstapel verlaufende Frischluftleitung 26 zugeführt, die entlang des Mischers zumindest eine Öffnung 44, beispielsweise eine in Längsrichtung verlaufenden Spaltöffnung, oder mehrere Öffnungen aufweist, durch welche Frischluft in die erste Mischzone 43 gelangen kann. Der Gasmischer 25 weist ferner eine zweite, stromabwärts der ersten Mischzone 43 angeordnete zweite Mischzone 45 auf, in welcher Anodenabgas in das Gemisch aus Kathodenabluft und Frischluft eingeleitet wird. Der Gasstrom verläuft in der ersten Mischzone 43 im Wesentlichen horizontal, während er im Übergangsbereich 46 von der ersten zur zweiten Mischzone nach unten umgelenkt wird. Ferner ist der Gasmischer 25 so ausgebildet, dass sich der Strömungsquerschnitt der ersten Mischzone 43 sowie der Strömungsquerschnitt des zuströmenden Anodenabgases zur zweiten Mischzone 45 hin verringert, so dass das Anodenabgas und das bereits vorgemischte Gemisch aus Kathodenabluft und Frischluft zur zweiten Mischzone 45 hin beschleunigt werden. Auf Höhe der ersten Mischzone und im Übergangsbereich von der ersten zur zweiten Mischzone verläuft die Anodenabgasströmung und die Strömung des Gemisches aus Kathodenabluft und Frischluft im Wesentlichen parallel, so dass der Anodenabgasstrom im Wesentlichen tangential in das Gemisch aus Kathodenabluft und Frischluft eingeleitet wird. Im Bereich der ersten Mischzone 43 werden der Anodenabgasstrom und das Gemisch aus Kathodenabluft und Frischluft durch ein Leitblech 47 getrennt, das im Übergangsbereich von der ersten zur zweiten Mischzone endet. Dieses Ende des Leitblechs 47 weist eine Vielzahl von Zungen 49 auf, die in Längsrichtung abwechselnd nach oben bzw. unten gebogen und mit der Oberseite 50 bzw. der Unterseite 51 des Gehäuses 52 des Gasmischers 25 verschweißt sind. Diese Zungen 49 sorgen für eine zusätzliche Verwirbelung des Gasgemisches und gewährleisten eine homogene Mischung von Anodenabgas, Kathodenabluft und Frischluft. Zusätzlich oder alternativ können andere statische Mischelemente vorgesehen sein. Die zweite Mischzone 45 umfasst außerdem einen Verteiler 53, der sich von einem ersten Strömungsquerschnitt am Eingang 54 des Verteilers auf einen zweiten Strömungsquerschnitt am Ausgang 55 des Verteilers erweitert, wobei der Strömungsquerschnitt am Ausgang des Verteilers im Wesentlichen der Fläche der Eintrittsöffnung auf der Oberseite eines dem Gasmischer 25 nachgeordneten katalytischen Brenners 27 zur Verbrennung von in dem Anodenabgas enthaltenen Brenngas entspricht. Wie insbesondere aus Fig. 3 deutlich wird, ist der Gasmischer 25 im Wesentlichen zwischen dem Brennstoffzellenstapel und einer Seitenwand 56 des den Brennstoffzellenstapel umgebenden gasdichten Schutzgehäuses angeordnet. Gegenüber dem Stand der Technik können somit längere Mischzonen realisiert werden. Außerdem kann ohne übermäßigen Einsatz von zahlreichen, den Strömungswiderstand erhöhenden statischen Mischelementen eine effektivere Durchmischung erzielt werden.

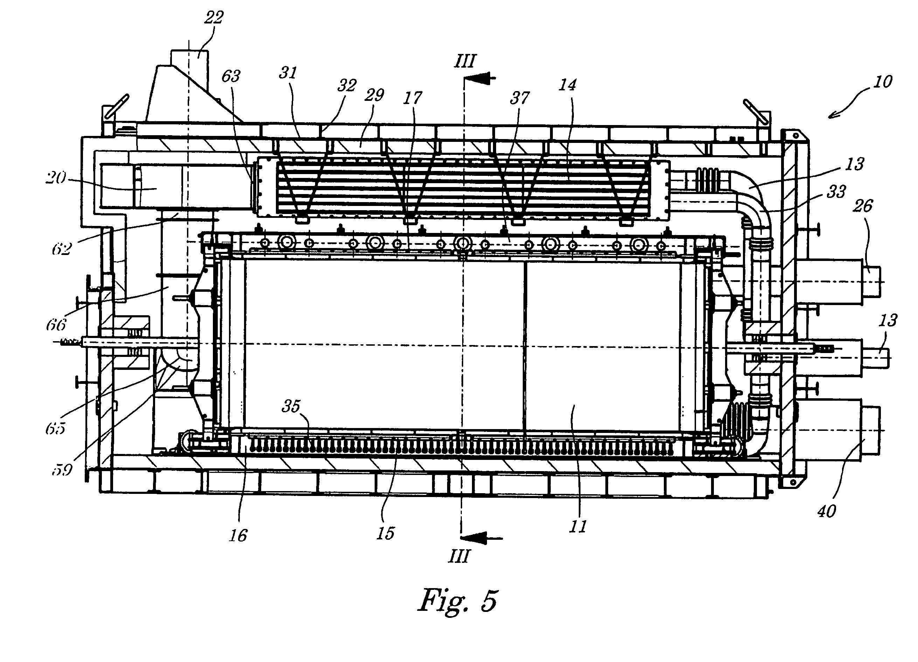

Der sich an den Gasmischer 25 anschließende katalytische Brenner 27 ist ebenfalls seitlich neben dem Brennstoffzellenstapel 11 an der Seitenwand 56 des gasdichten Schutzgehäuses 12 angeordnet. Der katalytische Brenner 27 weist eine Oberseite mit wenigstens einer Einlassöffnung 57 auf, die mit dem Gasmischer 25 zum Mischen von Anodenabgas, Kathodenabluft und Frischluft kommuniziert. An seiner Unterseite weist der katalytische Brenner wenigstens eine Auslassöffnung 58 auf, die mit einer Sammelleitung 59 zum Sammeln der zum Kathodeneingang zurückzuführenden Abgase kommuniziert. Der katalytische Brenner 27 kann beispielsweise einen Wabenkatalysator umfassen. Aufgrund der erfindungsgemäß vorgesehenen Strömungsführung des Abgases von oben durch den Katalysator nach unten ist das Katalysatormaterial keinem erhöhten Abrieb ausgesetzt, so dass der erfindungsgemäße katalytische Brenner 27 insbesondere als Schüttgutkatalysator ausgebildet werden kann. Aufgrund der seitlichen Anordnung neben dem Brennstoffzellenstapel befindet sich der katalytische Brenner 27 in unmittelbarer Nähe einer Seitenwand 56 des Schutzgehäuses 12 der erfindungsgemäßen Brennstoffzellenanordnung 10, so dass das Katalysatormaterial besonders einfach gereinigt bzw. ausgetauscht werden kann. Dazu sind in der Seitenwand 56 des Schutzgehäuses 12 eine oder mehrere Reinigungsöffnung 60 vorgesehen. Die Reinigungsöffnungen 60 sind insbesondere in der perspektivischen Darstellung der Fig. 7 einer Variante in der Ausführungsform der Figuren 3 - 6 erkennbar. Katalysatormaterial kann durch die Reinigungsöffnungen 60 beispielsweise mithilfe eines Sauggebläses abgesaut werden kann. Im Gegensatz zum Stand der Technik ist daher keine aufwändige Demontage mehr erforderlich. Über die Reinigungsöffnungen 60 in der Seitenwand 56 kann direkt auf das Katalysatormaterial zugegriffen werden, beispielsweise, wenn der katalytische Brenner einen permanent offenen Zugang auf entsprechender Höhe aufweist und ein weitgehend gasdichter Abschluss des Rands des Zugangs mit der Innenseite der Seitenwand 56 des Schutzgehäuses 12 gewährleistet ist. Wie in der dargestellten Ausführungsform weist der katalytische Brenner 27 oder der unmittelbar darüber liegende schräge Abschnitt des Verteilers 53 auf Höhe der Reinigungsöffnungen 60 verschließbare Zugangsöffnung 61 zum Katalysatormaterial auf (vgl. Fig. 5).

Zur Aufrechterhaltung der Zirkulation des Kathodengases, d.h. des im katalytischen Brenner nachverbrannten Gemischs aus Kathodenabluft, Anodenabgas und Frischluft, sind Rückführmittel zur Rückführung zumindest eines Teils des Anodenabgases und zumindest eines Teils der Kathodenabluft zu den Kathodeneingängen 18 der Kathodenkammern der Brennstoffzellen des Stapels 11 vorgesehen. Die Rückführmittel umfassen wenigstens eine an der Längsseite des Brennstoffzellenstapels angeordnete Sammelleitung 59 zum Sammeln der zurückgeführten Abgase, die in einen Einlass 62 einer an der Stirnseite des Brennstoffzellenstapels angeordneten Fördereinrichtung mündet, die Umwälzgebläse 20 und einen Elektromotor 22 umfasst. Das Umwälzgebläse weist einen Auslass 63 auf, der mit Kathodengaszufuhrmitteln kommuniziert, welche das Gasgemisch zum Eingang der Kathodenkammern leiten.

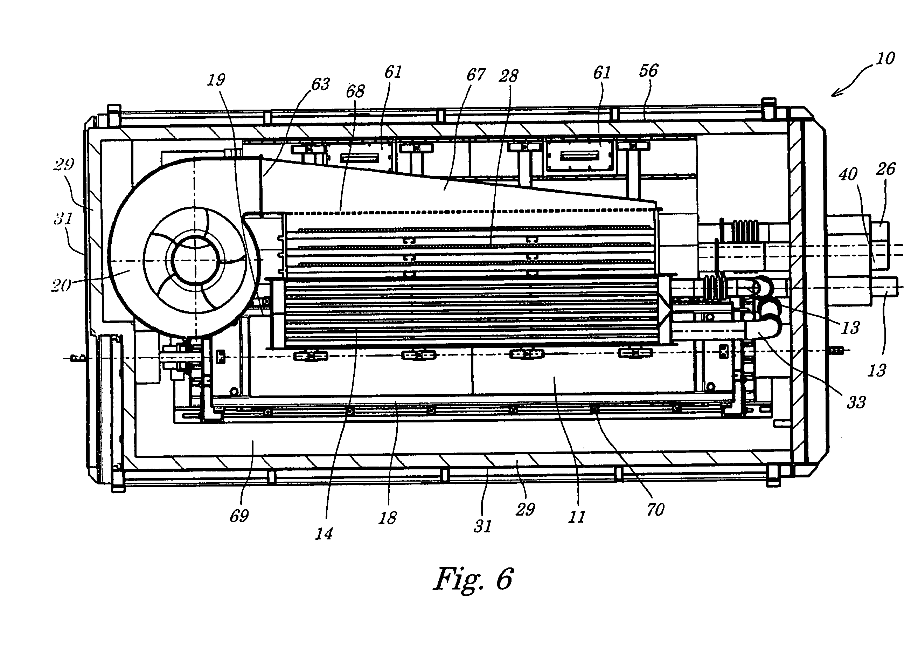

Die Sammelleitung 59 ist eine im Wesentlichen horizontal verlaufende Sammelleitung, die sich am Fußbereich des Brennstoffzellenstapels 11 über im wesentlichen die gesamte Länge des Brennstoffzellenstapels 11 erstreckt. In der Sammelleitung 59 sind zahlreiche Umlenkbleche 64 angeordnet, die den vertikalen vom Gasmischer 25 und katalytischen Brenner 27 herkommenden Gasstrom in einen horizontalen Gasstrom entlang der Längsachse der Sammelleitung 59 umlenken. Die Umlenkbleche 64 sind als gebogene Bleche ausgebildet und in horizontaler und vertikaler Richtung versetzt zueinander angeordnet, so dass eine gleichmäßige horizontale Strömung ohne zusätzliche Verwirbelungen erzeugt wird. Vorzugsweise sind die Umlenkbleche auf einer Raumdiagonalen angeordnet, die vom unteren, vom Einlass 62 des Umwälzgebläses 20 entfernten Ende des horizontalen Abschnitts Sammelleitung 59 zum oberen, zum Einlass 62 gerichteten Ende des horizontalen Abschnitts der Sammelleitung 59 verläuft. Am Ende des horizontalen Abschnitts der Sammelleitung 59 sind wiederum Umlenkbleche 65 angeordnet, welche den Gasstrom nach oben in einen im Wesentlichen vertikalen Leitungsabschnitt 66 zum Einlass 62 des Umwälzgebläses 20 umlenken. An den Auslass 63 des Umwälzgebläses 20 schließt sich ein Gasverteiler 67 an, der sich im Kopfbereich des Brennstoffzellenstapels im Wesentlichen über die gesamte Länge des Brennstoffzellenstapels erstreckt. Der Gasverteiler 67 weist parallel zu seiner Längsachse verteilt angeordnete, seitliche Auslassöffnungen 68 auf, durch die das Gasgemisch in eine den Auslassöffnungen des Gasverteilers nachgeordnete als Startheizer dienende Heizeinrichtung 28 strömen kann. Wie man insbesondere in Fig. 6 erkennt verringert sich die senkrecht zu seiner Längsachse orientierte Querschnittsfläche des Innenraums des Gasverteilers 67 von seinem am Auslass 63 der Umwälzgebläses 20 angeordneten Ende zu seinem gegenüberliegenden Ende hin, so dass die seitlich aus den Austrittsöffnungen 68 austretende Gasmenge über die gesamte Länge des Gasverteilers 67 im Wesentlichen konstant ist. Der dem Gasverteiler 67 nachgeordnete Startheizer 28 heizt beim Anfahren der Brennstoffzellenanordnung 10 das zirkulierende Gasgemisch auf die Betriebstemperatur auf. Unmittelbar an den Startheizer 28 schließt sich der bereits oben erwähnte Wärmetauscher 14 an, in welchem das zirkulierende Kathodengas mit dem in das Schutzgehäuse 12 eingeleiteten Brenngas in thermischen Kontakt gebracht wird. Nach Durchströmen des Wärmetauschers 14 strömt das zirkulierende Kathodengas frei durch den Innenraum 69 des Schutzgehäuses 12 zum kathodenseitigen Eingang 18 des Brennstoffzellenstapels 11 zurück.

Die in Figur 7 dargestellte Variante der erfindungsgemäßen Brennstoffzellenanordnung unterscheidet sich von der in den Figuren 3-6 dargestellten Ausführungsform nur dadurch, dass bei der Variante der Figur 7 die Brennstoffleitung 13 geradlinig auf Höhe des Wärmetauschers 14 in das Schutzgehäuse 12 mündet, während die Brennstoffleitung 13 bei der Ausführungsform der Figuren 4 - 6 unterhalb der Frischluftleitung 26 in das Schutzgehäuse mündet und, wie insbesondere in Fig. 5 erkennbar, innerhalb des Schutzgehäuses nach oben in Richtung Wärmetauscher 14 umgelenkt wird.

Wie man den in den Figuren dargestellten Ausführungsformen entnehmen kann, begünstigt die erfindungsgemäße Brennstoffzellenanordnung einen modularen Aufbau aus voneinander weitgehend unabhängigen Baugruppen, die über standardisierte Schnittstellen miteinander kommunizieren.

Bei der erfindungsgemäßen Brennstoffzellenanordnung umfasst eine erste Baugruppe den Brennstoffzellenstapel 11 mit den Brenngaszufuhrmitteln, also insbesondere der Brenngasleitung 13 und der Frischluftzufuhrleitung, und den Anodengasabfuhrmitteln, also insbesondere dem Anodenabgassammler 37. Der Anodengassammler 37 wird mittels einer Spanneinrichtung 70 im Gehäuse mit dem Brennstoffzellenstapel und dem am Anodeneingang angeordneten Brenngasverteiler 16 verspannt.

Die zweite Baugruppe umfasst die Kathodengaszufuhrmittel mit Kathodengasverteiler67, dem Startheizer 28 und dem Wärmetauscher 14, die in einem Montagerahmen 71 an der Unterseite der Decke 72 des Schutzgehäuses 12 montiert sind.

Die dritte Baugruppe umfasst den Kathodenabluftsammler 38, eine Kathodenabluftleitung 40, einen Gasmischer 25 zur Vermischung von Frischluft, der Kathodenabluft und der Anodenabgase, einen katalytischen Brenner 27 und eine Sammelleitung 59 der Rückführmittel. In der dargestellten Ausführungsform ist die dritte Baugruppe unterteilt in eine erste Unterbaugruppe, die den Kathodenabluftsammler 38 und die Kathodenab-luftleitung 40 umfasst, sowie eine zweite Unterbaugruppe, die den Gasmischer 25, den katalytischen Brenner 27 und die Sammelleitung 59 der Rückführmittel umfasst.

Schließlich umfasst eine vierte Baugruppe die Fördereinrichtung der Rückführmittel, die aus einem Umwälzgebläse 20 mit einem Laufradgehäuse und einem Einlass 62 mit saugseitigen Anschlüssen, die mit der Sammelleitung 59 der dritten Baugruppe kommunizieren, und mit einem Anschluss 63 mit druckseitigen Anschlüssen, die mit dem Kathodengasverteiler 67 der zweiten Baugruppe kommunizieren, sowie dem Elektromotor 22 zum Antrieb des Umwälzgebläses 20 besteht.

Die Baugruppen sind im Inneren des gasdichten Schutzgehäuses 12 angeordnet, wobei das Schutzgehäuse eine im Wesentlichen quaderförmige Allgemeinform aufweist.

Ein besonderer Vorteil der erfindungsgemäßen Anordnung ist darin zu sehen, dass die zweite und vierte Baugruppe vorab mit den Innenwänden des Schutzgehäuses verbunden werden können, bevor die erste und dritte Baugruppe eingeschoben werden.

## Patentansprüche

1. Brennstoffzellenanordnung (10) mit
wenigstens einem horizontal angeordneten Brennstoffzellenstapel (11), der zahlreiche Brennstoffzellen aufweist, die jeweils eine Anode, eine Kathode und einen zwischen Anode und Kathode angeordneten Elektrolyten umfassen;
Brenngaszufuhrmitteln zur Zuführung von Brenngas zu den Anoden der Brennstoffzellen;
Anodengasabfuhrmitteln zur Abführung des Anodenabgases von den Anoden,
Kathodengaszufuhrmitteln zur Zuführung von Kathodengas zu den Kathoden der Brennstoffzellen,
Kathodengasabfuhrmitteln zur Abführung der Kathodenabluft von den Brennstoffzellen, und
Rückführmitteln zur Rückführung von zumindest einem Teil des Anodenabgases und/oder der Kathodenabluft zu den Kathoden der Brennstoffzellen, **dadurch gekennzeichnet,**
**dass** die Brennstoffzellenanordnung (10) aus modularen, voneinander unabhängigen Baugruppen aufgebaut ist, die über standardisierte Schnittstellen miteinander kommunizieren, wobei
eine erste Baugruppe den Brennstoffzellenstapel (11) mit den Brenngaszufuhrmitteln, und den Anodengasabfuhrmitteln umfasst,
eine zweite Baugruppe die Kathodengaszuführmittel mit einem Kathodengasverteiler (67), einem Startheizer (28) und einem Wärmetauscher (14) umfasst,
eine dritte Baugruppe einen Kathodenabluftsammler (38), eine Kathodenabluftleitung (40), einen Gasmischer (25) zur Vermischung von Frischluft, der Kathodenabluft und Anodenabgase, einen katalytischen Brenner (27) und eine Sammelleitung (59) der Rückführmittel umfasst,
und eine vierte Baugruppe eine Fördereinrichtung der Rückführmittel umfasst.

2. Brennstoffzellenanordnung (10) gemäß Anspruch 1, **dadurch gekennzeichnet, dass** die Fördereinrichtung ein motorbetriebenes Umwälzgebläse (20) mit einem Laufradgehäuse und einen Einlass (62) mit saugseitigen Anschlüssen, die mit der Sammelleitung (59) der dritten Baugruppe kommunizieren und einen Auslass (63) mit druckseitigen Anschlüssen, die mit dem Kathodengasverteiler (67) der zweiten Baugruppe kommunizieren, umfasst.

3. Brennstoffzellenanordnung (10) gemäß einem der Ansprüche 1 oder 2, **dadurch gekennzeichnet, dass** die Brennstoffzellenanordnung (10) ein gasdichtes Schutzgehäuse (12) umfasst, welches die Baugruppen umgibt.

4. Brennstoffzellenanordnung (10) gemäß Anspruch 3, **dadurch gekennzeichnet, dass** das Schutzgehäuse (12) eine im wesentlichen quaderförmige Allgemeinform aufweist.

5. Brennstoffzellenanordnung (10) gemäß einem der Ansprüche 1 bis 4, **dadurch gekennzeichnet, dass** die dritte Baugruppe unterteilt ist in eine erste Unterbaugruppe, die den Kathodenabluftsammler (38) und die Kathodenabluftleitung (40) umfasst, und eine zweite Unterbaugruppe, die den Gasmischer (25), den katalytischen Brenner (27) und die Sammelleitung (59) der Rückführmittel umfasst.

## Claims

1. Fuel cell arrangement (10) having
at least one horizontally arranged fuel cell stack (11) which has numerous fuel cells which comprise in each case an anode, a cathode and an electrolyte arranged between the anode and cathode;
combustion gas supply means for supplying combustion gas to the anodes of the fuel cells;
anode gas discharge means for discharging the anode waste gas from the anodes,
cathode gas supply means for supplying cathode gas to the cathodes of the fuel cells,
cathode gas discharge means for discharging the cathode waste air from the fuel cells, and
return means for returning at least a part of the anode waste gas and/or of the cathode waste air to the cathodes of the fuel cells, **characterized**
**in that** the fuel cell arrangement (10) is constructed from modular, mutually independent assemblies which communicate with one another via standardized interfaces, wherein
a first assembly comprises the fuel cell stack (11) with the combustion gas supply means and the anode gas discharge means,
a second assembly comprises the cathode gas supply means with a cathode gas distributor (67), a start-up heater (28) and a heat exchanger (14),
a third assembly comprises a cathode waste air collector (38), a cathode waste air line (40), a gas mixer (25) for mixing fresh air, the cathode waste air and anode waste gases, a catalytic burner (27) and a collecting line (59) of the return means,
and a fourth assembly comprises a delivery device of the return means.

2. Fuel cell arrangement (10) according to Claim 1, **characterized in that** the delivery device comprises a motor-driven circulation blower (20) with a rotor housing and comprises an inlet (62) with suction-side ports which communicate with the collecting line (59) of the third assembly and comprises an outlet (63) with pressure-side ports which communicate with the cathode gas distributor (67) of the second assembly.

3. Fuel cell arrangement (10) according to either of Claims 1 and 2, **characterized in that** the fuel cell arrangement (10) comprises a gas-tight protective housing (12) which surrounds the assemblies.

4. Fuel cell arrangement (10) according to Claim 3, **characterized in that** the protective housing (12) has a substantially cuboidal general form.

5. Fuel cell arrangement (10) according to one of Claims 1 to 4, **characterized in that** the third assembly is divided into a first subassembly, which comprises the cathode waste air collector (38) and the cathode waste air line (40), and a second subassembly, which comprises the gas mixer (25), the catalytic burner (27) and the collecting line (59) of the return means.

## Revendications

1. Dispositif de piles à combustible (10), comportant
- au moins un empilement (11) de piles à combustible disposé horizontalement, qui présente de nombreuses piles à combustible comprenant chacune une anode, une cathode et un électrolyte disposé entre l'anode et la cathode;
- des moyens d'apport de gaz pour apporter un gaz combustible aux anodes des piles à combustible;
- des moyens d'évacuation des gaz anodiques pour évacuer les gaz anodiques usés à partir des anodes;
- des moyens d'apport de gaz cathodique pour apporter du gaz cathodique aux cathodes des piles à combustible;
- des moyens d'évacuation des gaz cathodiques pour évacuer l'air cathodique vicié des piles à combustible;
- des moyens de retour pour recycler au moins une partie des gaz anodiques usés et/ou de l'air cathodique vicié aux cathodes des piles à combustible,
**caractérisé en ce que**
- le dispositif de piles à combustible (10) se compose de groupes modulaires, indépendants l'un de l'autre, qui communiquent les uns avec les autres par des interfaces normalisées, dans lequel
- un premier groupe comprend l'empilement de piles à combustible (11) avec les moyens d'apport de gaz combustible, et les moyens d'évacuation de gaz anodiques,
- un deuxième groupe comprend les moyens d'apport de gaz cathodique avec un distributeur de gaz cathodique (67), un radiateur de démarrage (28) et un échangeur de chaleur (14),
- un troisième groupe comprend un collecteur d'air cathodique vicié (38), une conduite d'air cathodique vicié (40), un mélangeur de gaz (25) destiné à mélanger de l'air frais, l'air cathodique vicié et les gaz anodiques usés, un brûleur catalytique (27) et une conduite collectrice (59) des moyens de retour,
- et un quatrième groupe comprend un dispositif de transport des moyens de retour.

2. Dispositif de piles à combustible (10) selon la revendication 1, **caractérisé en ce que** le dispositif de transport comprend une soufflante de recirculation motorisée (20) avec un boîtier de roue mobile et une entrée (62) avec des raccords côté aspiration, qui communiquent avec la conduite collectrice (59) du troisième groupe, et une sortie (63) avec des raccords côté refoulement, qui communiquent avec le distributeur de gaz cathodique (67) du deuxième groupe.

3. Dispositif de piles à combustible (10) selon l'une quelconque des revendications 1 ou 2, **caractérisé en ce que** le dispositif de piles à combustible (10) comprend un boîtier de protection étanche au gaz (12), qui entoure les groupes.

4. Dispositif de piles à combustible (10) selon la revendication 3, **caractérisé en ce que** le boîtier de protection (12) présente une forme générale essentiellement parallélépipédique.

5. Dispositif de piles à combustible (10) selon l'une quelconque des revendications 1 à 4, **caractérisé en ce que** le troisième groupe est subdivisé en un premier sous-groupe, qui comprend le collecteur d'air cathodique vicié (38) et la conduite d'air cathodique vicié (40), et un deuxième sous-groupe, qui comprend le mélangeur de gaz (25), le brûleur catalytique (27) et la conduite collectrice (59) des moyens de retour.
